# EUROPEAN PATENT APPLICATION

(11) **EP 4 542 495 A1**
(43) Date of publication of application: **23.04.2025**
(21) Application number: 24202756.3
(22) Date of filing: 26.09.2024
(51) Int. Cl.: G06T 11/20

(54) **ELECTRONIC DEVICE, DISPLAY CONTROL METHOD, AND PROGRAM**

(30) Priority: 18.10.2023 JP 2023179390
(71) Applicant: CASIO COMPUTER CO., LTD., Tokyo 151-8543 (JP)
(72) Inventor: Tanaka, Toshiaki, Tokyo, 205-8555 (JP); Tashiro, Saki, Tokyo, 205-8555 (JP); Murakami, Chinari, Tokyo, 205-8555 (JP)
(74) Representative: Grünecker Patent- und Rechtsanwälte PartG mbB

(57) **Abstract**

An electronic device includes a display means (15) and a control means (11) that shows graphs with coordinate axes when a first mode or a second mode is selected. Second information is shown with the graphs on a second information display screen (34, 35). In the second mode, the user can select, as a second selected graph, a graph the second information of which is to be shown. In the first mode, a selection screen (32) is shown before transition to a first information display screen (33) on which first information is shown with the graphs. The selection screen (32) is for selecting, as a first selected graph, a graph the first information of which is shown. While displaying the graphs with a same color density on the first and second information display screens, the control means displays unselected graphs with a lower color density on the selection screen.

## Description

### TECHNICAL FIELD

The present disclosure relates to an electronic device, a display control method, and a program.

### DESCRIPTION OF THE RELATED ART

Conventionally, electronic devices such as scientific calculators capable of showing a graph representing a function registered by a user on a display unit have been known, as disclosed in the JPH11184821A, for example.

### SUMMARY OF THE INVENTION

### Problems to be Solved by the Invention

However, there is a problem that, when multiple graphs are shown on a display unit, it is hard to grasp which one of the graphs being shown is selected in a user operation of selection.

The present disclosure has an object of displaying a selected graph in an easily recognizable manner.

### Means for Solving the Problems

According to an aspect of the present disclosure, provided is an electronic device including:
a display means (15); and
a control means (11) that shows on the display means (15) a plurality of graphs with predetermined coordinate axes when a first mode or a second mode is selected by a user,
wherein predetermined second information is shown with the plurality of graphs on the display means (15) on a second information display screen (34, 35) and, the second mode is set as a mode in which the user can select, as a second selected graph, a graph the second information of which is to be shown among the plurality of graphs on the second information display screen (34, 35),
wherein the first mode is set as a mode in which a selection screen (32) is shown on the display means (15) before transition to a first information display screen (33) on which first information different from the second information is shown with the plurality of graphs on the display means (15), wherein the selection screen (32) is for the user selecting, as a first selected graph, a graph the first information of which is to be shown among the plurality of graphs,
wherein while displaying the plurality of graphs with a same color density on the first information display screen and on the second information display screen, the control means displays one or more unselected graphs other than the first selected graph among the plurality of graphs with a lower color density than a color density of the first selected graph on the selection screen.

According to another aspect of the present disclosure, provided is a display control method, including:
a control step of showing on a display means (15) a plurality of graphs with predetermined coordinate axes when a first mode or a second mode is selected by a user,
wherein predetermined second information is shown with the plurality of graphs on the display means (15) on a second information display screen (34, 35) and, the second mode is set as a mode in which the user can select, as a second selected graph, a graph the second information of which is to be shown among the plurality of graphs on the second information display screen,
wherein the first mode is set as a mode in which a selection screen (32) is shown on the display means (15) before transition to a first information display screen (33) on which first information different from the second information is shown with the plurality of graphs on the display means (15), wherein the selection screen (32) is for the user selecting, as a first selected graph, a graph the first information of which is to be shown among the plurality of graphs,
wherein in the control step, while displaying the plurality of graphs with a same color density on the first information display screen and on the second information display screen, displayed are one or more unselected graphs other than the first selected graph among the plurality of graphs with a lower color density than a color density of the first selected graph on the selection screen.

According to another aspect of the present disclosure, provided is a program causing a computer to function as:
a control means that shows on a display means (15) a plurality of graphs with predetermined coordinate axes when a first mode or a second mode is selected by a user,
wherein predetermined second information is shown with the plurality of graphs on the display means (15) on a second information display screen (34, 35) and, the second mode is set as a mode in which the user can select, as a second selected graph, a graph the second information of which is to be shown among the plurality of graphs on the second information display screen,
wherein the first mode is set as a mode in which a selection screen (32) is shown on the display means (15) before transition to a first information display screen (33) on which first information different from the second information is shown with the plurality of graphs on the display means (15), wherein the selection screen (32) is for the user selecting, as a first selected graph, a graph the first information of which is to be shown among the plurality of graphs,
wherein while displaying the plurality of graphs with a same color density on the first information display screen and on the second information display screen, the control means displays one or more unselected graphs other than the first selected graph among the plurality of graphs with a lower color density than a color density of the first selected graph on the selection screen.

### Advantageous Effects of the Invention

According to the present disclosure, a selected graph can be displayed in an easily recognizable manner.

### BRIEF DESCRIPTION OF THE DRAWINGS

Fig. 1 is a perspective view showing a configuration of a scientific calculator;
Fig. 2 is a block diagram showing a main functional configuration of the scientific calculator;
Fig. 3 shows a first menu screen;
Fig. 4 shows a function setting menu screen;
Fig. 5 shows a graph drawing screen;
Fig. 6 shows a second menu screen;
Fig. 7 shows an analysis menu screen;
Fig. 8 shows a graph selection screen;
Fig. 9 shows the graph selection screen;
Fig. 10 shows another example of the graph selection screen;
Fig. 11 shows the graph selection screen when the first function and the second function are inequalities;
Fig. 12 shows the graph selection screen when the first function and the second function are inequalities;
Fig. 13 shows an analysis result screen;
Fig .14 shows a tracing screen;
Fig .15 shows the tracing screen;
Fig. 16 shows a tangent line drawing screen;
Fig .17 is a flowchart showing a control procedure of graph drawing processing;
Fig. 18 is a flowchart showing a control procedure of first information display processing; and
Fig. 19 is a flowchart showing a control procedure of second display processing.

### DETAILED DESCRIPTION

Hereinafter, an embodiment of the present disclosure is described with reference to the drawings.

### (Configuration of Scientific Calculator)

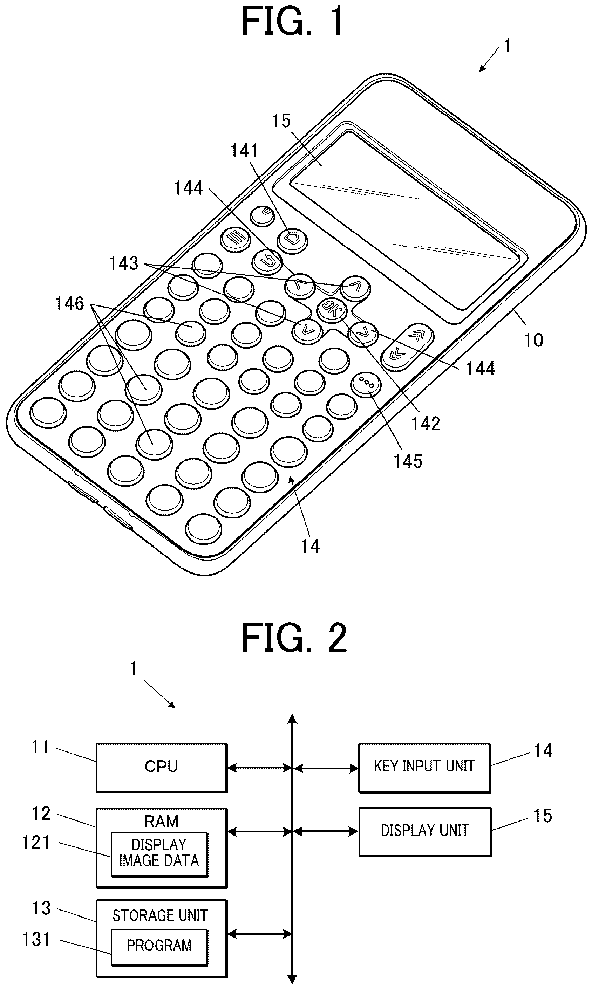

Fig. 1 is a perspective view showing a configuration of a scientific calculator 1. The scientific calculator 1 (electronic device) includes a case 10, a key input unit 14 mounted on the case 10, and a display unit (displaying means, display). The scientific calculator 1 can display an input expression and a calculation result thereof on the display unit 15 according to a user operation on the key input unit 14. The scientific calculator 1 can display a graph(s) representing a function(s) registered by a user, information on an analysis result(s) for the registered graph(s), and the like on the display unit 15.

Fig. 2 is a block diagram showing a main functional configuration of the scientific calculator 1. The scientific calculator 1 includes, in addition to the key input unit 14 and the display unit 15 described above, a central processing unit (CPU) 11 (at least one processor), a random access memory (RAM) 12, and a storage unit 13. The units of the scientific calculator 1 are connected to each other via a communication path such as a bus.

The CPU 11 is a processor that controls operations of the scientific calculator 1 by reading and executing a program 131 stored in the storage unit 13 to perform various kinds of arithmetic processing. The CPU 11 functions as a control means by executing the program 131 to execute various kinds of processing. For example, when one or more of the keys on the key input unit 14 are pressed, the CPU 11 shows on the display unit 15 the pressed key(s) and shows a calculation result corresponding to the user operation, or the like, as well as executing processing corresponding to the function(s) assigned to the pressed key(s). The scientific calculator 1 may include multiple processors (for example, multiple CPUs), and the multiple processors may execute multiple kinds of processing executed by the CPU 11 of the present embodiment. In that case, the multiple processors constitute the control means. In that case, the multiple processors may be involved in common processing, or the multiple processors may respectively execute different kinds of processing independently in parallel.

The RAM 12 provides a memory space for working to the CPU 11 and stores temporary data. The RAM 12 temporarily stores display image data 121 generated by the CPU 11 for displaying images on the display unit 15, various calculation results by the CPU 11, and the like. These kinds of data may be stored in the storage 13.

The storage unit 13 is a non-transitory storage medium readable by the CPU 11 as a computer, and stores the program 131 and various kinds of data. The storage unit 13 includes a nonvolatile memory such as a flash memory. The program 131 is stored in the storage unit 13 in a form of a program code that can be read by the computer.

The key input unit 14 includes multiple keys operated (pressed) by a user, as shown in Fig. 1. The multiple keys includes a home key 141 for showing a predetermined home screen on the display unit 15, an enter key 142 for inputting determination, up and down keys 143 for specifying up and down directions, left and right keys 144 for specifying left and right directions, a tool key 145 for calling various kinds of functions, or other various kinds of input keys 146. The various kinds of input keys 146 includes number keys, calculation keys for executing calculations such as addition, subtraction, multiplication, division, and the like, sign keys for inputting function signs such as "x" and "log," an AC key for clearing all results of calculation or the like done so far. When each of the keys shown in Fig. 1 is operated, the key input unit 14 outputs operation information corresponding to the operated key to the CPU 11.

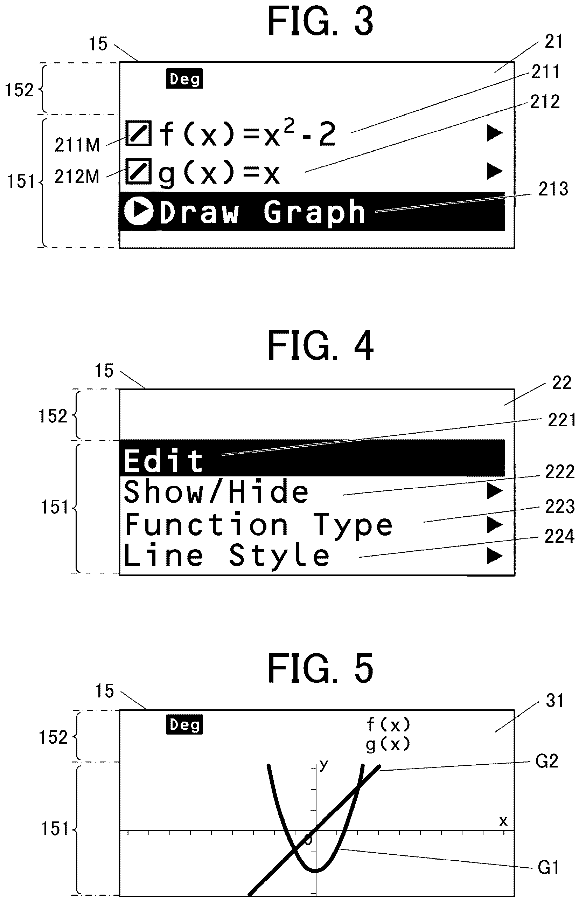

The display unit 15 includes a liquid crystal display and a driver circuit (not shown in the drawings) for driving the liquid crystal display, and performs various kinds of display according to a display control signal(s) and the display image data 121 output from the CPU 11 to the driver circuit. The liquid crystal display of the display unit 15 includes a band-shaped sub display area 152 at the top of the display (see Fig. 3) and a main display area 151 below the sub display area 152 (see Fig. 3). In the main display area 151, the display unit 15 controls a density of each of multiple pixels disposed in a matrix individually to perform display. Specifically, the main display area 151 includes pixel electrodes disposed in a matrix and common electrodes facing those pixel electrodes. The driver circuit selects the pixel electrodes with an active matrix method under the control of the CPU 11 to apply voltages corresponding to the display densities of the pixels to the pixel electrodes. Through this, the driver circuit controls a direction of a liquid crystal molecule for each of the pixels in a liquid crystal layer between the pixel electrodes and the common electrodes to adjust the density of each of the pixels. The display unit 15 of the present embodiment can display four gradations of black, dark gray, light gray, and white for each of the pixels according to a voltage applied to the pixel electrodes. That is, the display unit 15 is a display capable of four-gradation grayscale display (in other words, four-gradation monochromatic display). The configuration and operation of the display unit 15 are not limited to those described above, and may perform gradation display by time division driving (multiplex driving). For example, in a passive matrix system such as STN, the density of each pixel may be adjusted by controlling the ratio of time during which a predetermined on-voltage is applied to each pixel. As an example, for one pixel, the pixel is displayed in black by setting the on-voltage application time to 15 msec in a predetermined cycle relating to the display operation, the pixel is displayed in dark gray by setting the on-voltage application time to 10 msec in the above cycle, the pixel is displayed in light gray by setting the on-voltage application time to 5 ms sec in the above cycle, and the pixel may also be displayed in white by setting the on-voltage application time to 0 ms sec in the above cycle. The number of gradations on the display unit 15 is not limited to four, as long as it can display one intermediate gradation (gray) between black and white. In the present embodiment, the pixel value (dot number) in the main display area 151 is 63 dots in the vertical direction and 192 dots in the horizontal direction. However, the dot number is not limited to this example, and may be changed appropriately. The display image data 121 includes 63 × 192 pieces of pixel data corresponding to the pixels of the main display area 151, and each piece of the pixel data includes a pixel value denoting a gradation to exhibit on the corresponding pixel.

The display unit 15 applies a voltage to a segment electrode formed in a shape of each of the indicators including characters and signs (that is, in a segment system) in the sub display area 152 to display the indicators.

The scientific calculator 1 may include a unit of configuration not shown in Fig. 2, for example, a communication unit that communicates with an external device, a storage medium reading unit that reads data of an external storage medium such as a USB memory.

### (Operations of Scientific Calculator)

Next, the operations of the scientific calculator 1 are described, centered around the display operation on the display unit 15.

When the scientific calculator 1 is powered on or the home key 141 is operated, a home screen (not shown in the drawings) is shown on the display unit 15. Multiple icons representing multiple calculator apps are shown on the home screen. When one of the icons is selected by a user operation, the calculator app corresponding to the selected icon is executed. The multiple calculator apps include a "basic calculation app" for performing regular calculations, a "statistics app" for performing statistical calculations and regression calculations, a "distribution app" for performing probability and distribution calculations, a "spreadsheet app" for performing spreadsheet calculations, a "graph app" for drawing and analyzing (solving) graphs representing functions, a "numerical table creation app" for creating numerical tables, and the like. The types of the calculator apps are not limited to these examples. Among these, on the "graph app," graphs representing two functions registered by a user beforehand (hereinafter referred to as a first function f(x) and a second function g(x)) are shown on the display unit 15 with x and y axes (predetermined coordinate axes), or an analysis result or the like related to the graphs are shown on the display unit 15.

When the graph app is executed by selection of the icon of the graph app, a first menu screen 21 shown in Fig. 3 is shown on the display unit 15. On the first menu screen 21, a "first function" item 211 for setting related to the first function f(x), a "second function" item 212 for setting related to the second function g(x), and a "draw-graph" item 213 for showing the graphs of the first function f(x) and the second function g(x) are shown in the main display area 151. At the left end of the first function item 211, a line style label 211M representing the line style of the graph when the graph of the first function f(x) is displayed. At the left end of the second function item 212, a line style label 212M representing the line style of the graph when the graph of the second function g(x) is displayed. The indicator representing a unit of an angle (here, "Deg" meaning that the unit is a "degree") is displayed in the sub display area 152.

In Fig. 3, the characters and shapes in the main display area 151 are depicted with smooth lines, but as described above, the main display area 151 is a low-resolution display of 63 × 192, and the characters and shapes are displayed with jaggies (stair-like contours) corresponding to the resolution in actual (the same can be said about Figs. 4 to 16).

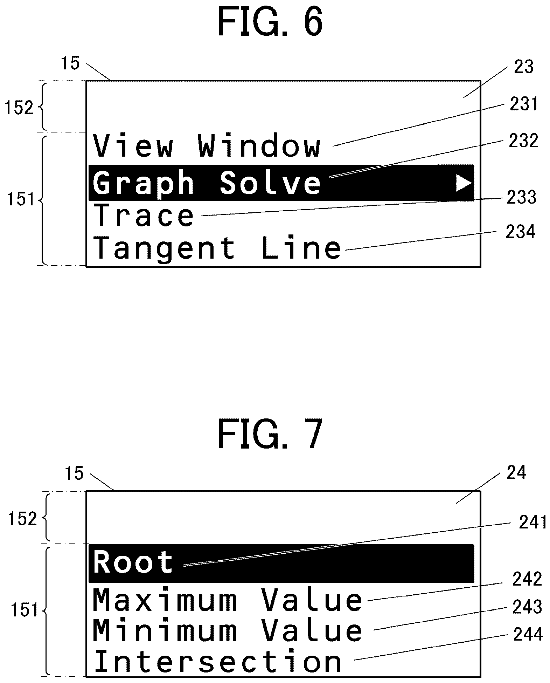

The user can select one item by operating the enter key 142 or the right direction key of the left and right keys 144 from a state in which a desired item is highlighted among the first function item 211, the second function item 212, and the draw-graph item 213 with the up and down keys 143. The items can be selected in a similar way in a function setting menu screen 22 (see Fig. 4), a second menu screen 23 (see Fig.6), and an analysis menu screen 24 (see Fig. 7). The display manner to highlight an item may be inversing black and white of an item as shown in Fig. 3, or surrounding an item with a frame.

When the first function item 211 or the second function item 212 is selected, the function setting menu screen 22 shown in Fig. 4 is shown on the display unit 15. On the function setting menu screen 22, a "function editing" item 221, a "show/hide" setting item 222, a "function type setting" item 223, and a "line style setting" item 224 are shown as menu items in the main display area 151. The function editing item 221 among these is selected, a function editing screen (not shown in the drawings) for editing and registering the first function f(x) or the second function g(x) is displayed. In the present embodiment, "f(x) = x² - 2" is registered as the first function f(x), "g(x) = x" as the second function g(x) by the user. The formulae of the functions registered are reflected to the first function item 211 and the second function item 212 on the first menu screen 21 in Fig. 3.

When the show/hide setting item 222 in Fig. 4 is selected, a setting screen (not shown in the drawings) for setting of displayed or hidden of the graph of the function is displayed.

When the function type setting item 223 is selected, a setting screen (not shown in the drawings) for setting of equation/inequality of the function is shown. On this setting screen, the types of the function may be selected from an equation denoted by an equal sign ("=") or an inequality denoted by one of four types of inequality signs (">", "<", "≧", "≦").

When the line style setting item 224 is selected, a setting screen (not shown in the drawings) for setting the line style of the graph of the function. In the present embodiment, the line style of the graph may be selected from four styles of: a solid line with a thickness of 1 pixel; a solid line with a thickness of 2 pixels; a dashed line with a thickness of 1 pixel; and a dashed line with a thickness of 2 pixels. As such, the graphs of the first function f(x) and the second function g(x) may be represented using respectively different line styles in the scientific calculator 1. The line styles are not limited to those four. The selected lines are reflected to the line style labels 211M, 212 M shown in Fig. 3.

When the draw-graph item 213 in Fig.3 is selected, the graph drawing screen 31 shown in Fig. 5 is shown on the display unit 15. On the graph drawing screen 31, the x and y axes and the first graph G1 representing the first function f(x) and the second graph G2 representing the second function g(x) are displayed in the main display area 151. The function indicators ("f(x)" and "g(x)" here) representing the functions of the graphs being shown in the main display area 151 are displayed in the sub display area 152 in addition to the indicator of "Deg." When one of the first function f(x) and the second function g(x) is set as hidden in the setting screen opened from the show/hide setting item 222 in Fig.4, the graph of the function set as hidden and its corresponding function indicator are not shown on the graph drawing screen 31.

When the graph drawing screen 31 is to be shown , the CPU 11 calculates the trajectories of the first function f(x) and the second function g(x) on the xy plane (values of the first function f(x) and the second function g(x) at each position of the x axis), and generates the display image data 121 relating to an image with the first graph Gland the second graph G2 disposed on the xy coordinate plane. The CPU 11 shows the image in Fig. 5 in the main display area 151 of the display unit 15 by transmitting this display image data 121 to the display unit 15. On the graph drawing screen 31, the first graph G1 and the second graph G2 are both displayed in a black color which is the most dense color of the four gradations.

The graph drawing screen 31 is a basic screen related to displaying graphs. When the tool key 145 is pressed by a user operation with the graph drawing screen 31 being shown, the second menu screen 23 for showing the analysis results or various kinds of information relating to the graph(s) is shown on the display unit 15.

Fig.6 shows the second menu screen 23. On the second menu screen 23, a "window setting" item 231, a "solve-graph" item 232, a "trace" item 233, a "tangent line" item 234, and the like are displayed as the menu items in the main display area 151. When the window setting item 231 is selected, a setting screen (not shown in the drawings) for setting maximum values, minimum values, scale intervals, and the like of the x and y axes in the display area of the graphs (graph window) is displayed. When the solve-graph item 232 is selected, a graph solving (analysis) mode (first mode) is started, and an analysis menu screen 24 for performing various kinds of solutions (analyses) relating to the graph is displayed. When the trace item 233 is selected, a tracing mode (second mode) is started. When the tangent line item 234 is selected, a tangent line drawing mode (second mode) is started. The tracing mode and the tangent line drawing mode are described later.

On the second menu screen 23, a menu item(s) not shown in Fig. 6 may be shown by scrolling downward. For example, a "zooming in/out" item for zooming in/out the graph, a "coordinate plot" item for plotting an arbitrary coordinate, a "function display" item for showing a function formula corresponding to a graph, a background setting item for setting a background of a graph, and the like may be displayed.

### <Graph Solving Mode>

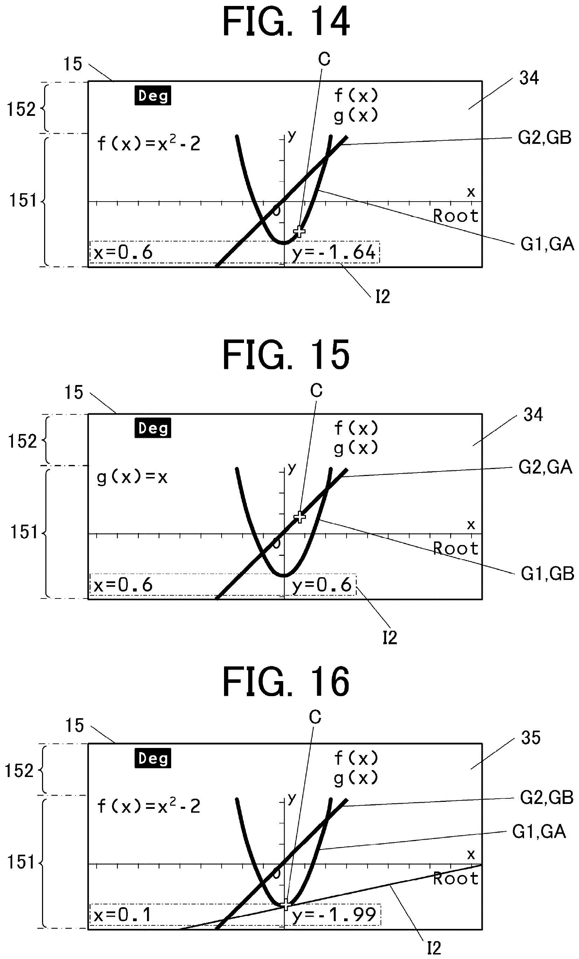

Hereinafter, the graph solving mode will be explained. Fig. 7 shows the analysis menu screen 24 shown in Fig. 15 when the graph solving mode is started. On the analysis menu screen 24, multiple menu items for specifying an analysis object are shown in the main display area 151. The multiple menu items include: a "root" item 241 for calculating a "root" of the graph (root(s); a coordinate value(s) of an intercept with x axis), a "maximum value" item 242 for calculating a "maximum value" within the graph window (predetermined range), a "minimum value" item 243 for calculating a "minimum value" within the graph window, and an "intersection" item 244 for calculating an "intersection" of the first graph G1 and the second graph G2. On the analysis menu screen 24, a menu item(s) not shown in Fig. 7 may be shown by scrolling downward. That is, a "y-intercept" item for calculating a "y-intercept" of the graph, a "y-coordinate" value calculation item for calculating "y-coordinate" in the y axis direction of the graph corresponding to a specified coordinate value on the x axis, and an "x-coordinate" value calculation item for calculating "x-coordinate" in the x axis direction of the graph corresponding to a specified coordinate value on the y axis.

The analysis objects except for the "intersection" among the analysis objects corresponding to the menu items on the analysis menu screen 24, that is, the "root," the "maximum value," the "minimum value," "y-intercept," "y-coordinate," and "x-coordinate," correspond to first information related to the graph. The "root" and the "y-intercept" correspond to the "coordinate value of the intersection of the graph and one of the two orthogonal coordinate axes." The "y-coordinate" and the "x-coordinate" correspond to the "coordinate value of the graph with respect to one of the two orthogonal axes corresponding to a specified coordinate value with respect to another one of the orthogonal axes."

When one of the menu items is selected on the analysis menu screen 24, a graph selection screen 32 for setting one of the first graph G1 and the second graph G2 to be analyzed is shown on the display unit 15. However, when the intersection item 244 is selected to analyze the "intersection" of the two graphs, the graph selection screen 32 is not shown as it is not necessary to select a graph.

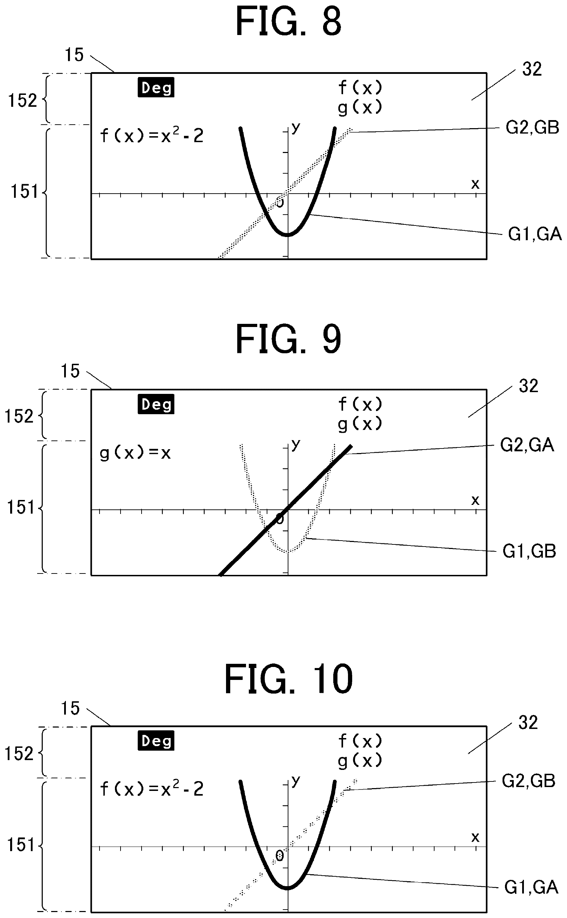

Figs. 8 and 9 show the graph selection screen 32. Hereinafter, an example in which the graph selection screen 32 is shown in response to selection of the root item 241 is described. On the graph selection screen 32, the first graph G1 and the second graph G2 are shown with the x and y axes in the main display area 151. One of the graphs set as a selected graph GA (first selected graph) at the moment is displayed in black, and another one of the graphs set as a unselected graph GB is displayed with a color density lower than the color density of the selected graph GA, in light gray in this example. The unselected graph GB may be displayed in dark gray. The selected graph GA is the graph to be analyzed for an analysis object ("root" here) (the graph whose first information is to be shown). The unselected graph GB is other remaining graphs which are not to be analyzed (the graph whose first information is not to be shown). In the present embodiment, since there are two graphs to be shown, when one of the graphs is set as the selected graph GA, the other one of the graphs is set as the unselected graph GB. In Fig. 8, the first graph G1 is set as the selected graph GA. The formula of the function corresponding to the selected graph GA (first function f(x) here) is shown at the upper left corner of the main display area 151.

At the time when the graph selection screen 32 is displayed, a predetermined one of the first graph G1 and the second graph G2, the first graph G1, for example, is set as the selected graph GA. A user can switch the selected graph GA by operating the up and down keys 143 on the graph selection screen 32. Fig. 9 shows the graph selection screen 32 in a state where the second graph G2 is set as the selected graph GA in response to one user operation of one of the up and down keys 143 from the state shown in Fig. 8. The color densities of the graphs are changed in response to switching of the selected graph GA. That is, in Fig. 9, the second graph G2 as the selected graph GA is displayed in black, and the first graph G1 as the unselected graph GB is displayed in light gray. The formula of the second function g(x) corresponding to the selected graph GA is shown at the upper left corner of the main display area 151. Thereafter, the selected graph GA and the unselected graph GB are switched in response to each operation of one of the up and down keys 143, and the displayed content on the display unit 15 is alternately switched between the states shown in Figs. 8 and 9. Here, as the selected graph GA and the unselected graph GB are respectively displayed in black and light gray, the user can easily recognize the selected graph GA and the unselected graph GB at the moment. Operating (a user operation of) the up and down keys 143 on the graph selection screen 32 corresponds to a first selection operation. The graph selection screen 32 corresponds to a selection screen for accepting the first selection operation.

The intersection(s) of the selected graph GA and the unselected graph GB is displayed in a display style of the selected graph GA on the graph selection screen 32. That is, the intersection is displayed in black, which is the color of the selected graph GA. The intersections of the graphs with the x and y axes are displayed in display styles of the respective graphs. In order to realize such display, the CPU 11 sets the color (density, pixel value) of the pixel(s) corresponding to the intercepts of the selected graph GA and the unselected graph GB is set as black in the processing of generation of the display image data 121. The color of the pixel corresponding to the intercepts of the graphs with the x and y axes is set as the color of the concerning graph (black for the selected graph GA, light gray for the unselected graph GB). In other words, the CPU 11 sets the colors of the pixels in a disposition such that the displayed elements look superimposed in the order of the x and y axes, the unselected graph GB, and the selected graph GA. The CPU 11 shows the graph selection screen 32 on the display unit 15 by transmitting this display image data 121 to the display unit 15.

The line styles set in the setting screen opened from the line style setting item 224 in Fig. 4 is reflected to the line styles of the graphs on the graph selection screen 32. For example, when the line style of the second graph G2 of the second function g(x) is set as a dashed line with a thickness of two pixels ad the second graph G2 is set as the unselected graph GB, the second graph G2 is displayed in a dashed line with a thickness of two pixels in light gray, as shown in Fig. 10.

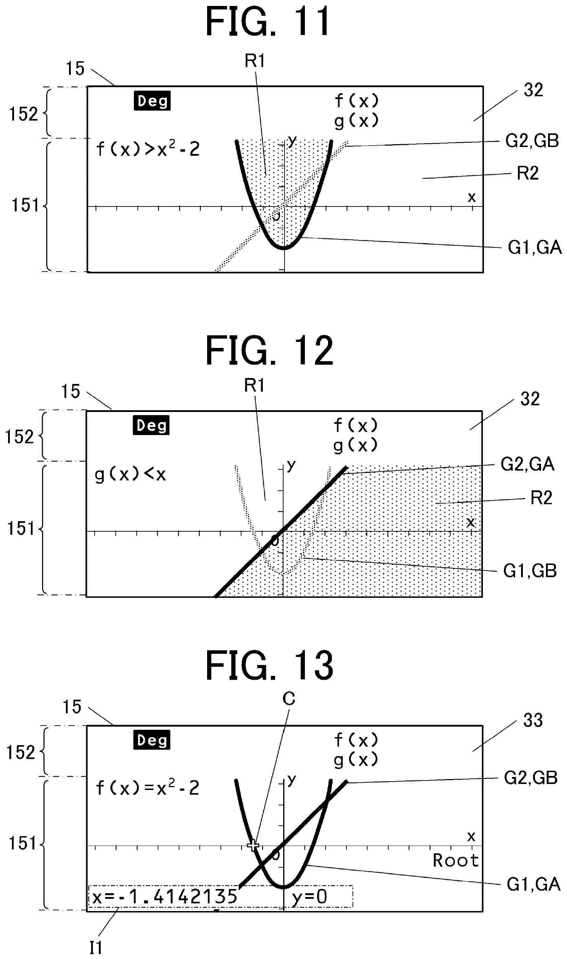

When the first function f(x) and/or the second function g(x) are set as an inequality on the setting screen opened from the function type setting item 223 in Fig. 4, an area specified by the inequality is displayed on the graph selection screen 32. On the graph selection screen 32 shown in Figs. 11 and 12, the first function f(x) and the second function g(x) are set as inequalities. Here, "f(x) > x ² - 2" is registered as the first function f(x), and "g(x) < x" is registered as the second function g(x).

On the graph selection screen 32 shown in Fig. 11, the first graph G1 of the first function f(x) is set as the selected graph GA. In this case, for the first graph G1 as the selected graph GA, a first function region R1 is colored by disposing dots at a predetermined density in the first function region R1 representing the first function f(x). On the other hand, for the second graph G2 as the unselected graph GB, a second function region R2 representing the second function g(x) is not colored and is without dots.

Fig. 12 shows the graph selection screen 32 when the second graph G2 of the second function g(x) is set as the selected graph GA. In this case, for the second graph G2 as the selected graph GA, the second function region R2 is colored by disposing dots at a predetermined density in the second function region R2 represented by the second function g(x). On the other hand, for the first graph G1 as the unselected graph GB, the first function region R1 representing the first function f(x) is not colored and is without dots. As described above, the region of the function corresponding to the selected graph GA is only colored, the user can recognize the selected graph GA and the unselected graph GB at the moment.

On the graph selection screen 32, the first function region R1 and the second function region T2 may be colored by disposing dots therein, regardless of which of the first graph G1 and the second graph G2 is set as the selected graph GA. In this case, the density of disposition of dots in the overlapping region of the first function region R1 and the second function region R2 may be higher than the density of disposition of dots in the region other than the overlapping region. Otherwise, the density of disposition of dots in the overlapping region of the first function region R1 and the second function region R2 may be a first density (e.x., black), the density of disposition of dots in the region of the selected graph GA excluding the overlapping region may be a second density lower than the first density (e.x., dark gray), and the density of disposition of dots in the region of the unselected graph GB excluding the overlapping region may be a density lower than the second density (e.x., light gray).

When the enter key 142 is selected on the graph selection screen 32, the setting f the selected graph GA and the unselected graph GB at the moment is confirmed, and the analysis result screen 33 for displaying the analysis result for the selected graph GA ("root" here) is shown on the display unit 15. The analysis result screen 33 corresponds to a first information display screen.

Fig. 13 shows the analysis result screen 33. Here, the first graph G1 is set as the selected graph GA. On the analysis result screen 33, the first graph G1 and the second graph G2 are shown with the x and y axes in the main display region 151. The selected graph GA (first graph G1) and the unselected graph GB (second graph G2) are displayed with the same density (both in black here) on the analysis result screen 33. The formula of the function corresponding to the selected graph GA (first function f(x) here) is shown at the upper left corner of the main display area 151. The coordinate values of the root, that is, the intercept of the first graph G1 as the selected graph with the x axis are displayed as first information I1 of the analysis result at the lower end of the main display area 151. A cursor C in a shape of "+" is displayed at the position of this intercept. The first graph G1 shown in Fig. 13 has two intercepts with the x axis. In a case where the graph has multiple intercepts, the intercept of which the first information I1 and the cursor C are shown is switched each time one of the left and right keys 144 is operated on the analysis result screen 33.

On the analysis menu screen 24 shown in Fig. 7, any one of the analysis objects other than the "root," that is, the "maximum value," the "minimum value," "y-axis intercept," "y-coordinate value," and "x-coordinate value" is selected, the graph selection screen 32 is shown first. The setting of the selected graph GA on the graph selection screen 32 is confirmed, the analysis result of the selected analysis object is displayed as the first information I1 on the analysis result screen33. When the intersection item 244 corresponding to the "intersection," the graph selection screen 32 is omitted, as described above, and the analysis result screen 33 is shown straight away.

### <Tracing Mode and Tangent Line Drawing Mode>

Next, the tracing mode and the tangent line drawing mode will be described.

When the trace item 233 is selected on the second menu screen 23 in Fig. 6, the tracing mode is started. The graph selection screen 32 does not appear in the tracing mode, and a tracing screen 34 is shown right away. Figs. 14 and 15 show the tracing screen 34. On the tracing screen 34, the first graph G1 and the second graph G2 are shown with the x and y axes in the main display area 151. On the tracing screen 34, the first graph G1 and the second graph G2 are displayed with the same color density (here, both in black). The tracing screen 34 corresponds to a second information display screen for displaying second information I2 related to the selected graph GA (a certain graph, a second selected graph) selected from the first graph G1 and the second graph G2. The second information I2 is a type of information different from the first Information I1 among information to be shown concerning the graph. From another viewpoint, the second information I2 is information having other analytical perspectives than that of the first information I1 among the information on the analysis results concerning the graph. In the tracing mode, the second information I2 is the coordinate values corresponding to a trace position when the selected graph GA is traced. On the tracing screen 34, the cursor C in the shape of "+" at the trace position is shown and the coordinates of the trace position are shown as the second information I2 at the lower end of the main display area 151. In Fig. 14, the first graph G1 is set as the selected graph GA. The coordinates of the trace position on the first graph G1, "x = 0.6" and "y = -1.64," are shown as the second information I2. At the upper left corner of the main display area 151, the formula of the first function f(x) is displayed.

On the tracing screen 34, the trace position may be moved in the + x direction along the selected graph by selecting the right direction key of the left and right keys 144. The trace position may be moved in the - x direction along the selected graph GA by selecting the left direction key of the left and right keys 144. The coordinate values of the second information I2 and the position of the cursor C according to the movement of the trace position.

When the tracing mode is started, a predetermined one of the first graph G1 and the second graph G2, the first graph G1, for example, is set as the selected graph GA. A user can switch the selected graph GA by operating the up and down keys 143 on the tracing screen 34. Fig. 15 shows the tracing screen 34 when the second graph G2 is set as the selected graph GA in response to one user operation on one of the up and down keys 143 from the state shown in Fig. 14. In Fig. 15, the cursor C is moved to a trace position on the second graph G2 with the x-coordinate being the same in response to the switch of the selected graph GA to the second graph G2. The coordinate values of the trace position on the second graph G2, "x = 0.6" and "y = 0.6," are shown as the second information I2. At the upper left corner of the main display area 151, the second function g(x) corresponding to the selected graph GA is shown. Thereafter, the selected graph GA is switched in response to each user operation on one of the up and down keys 143, and the display on the display unit 15 is switched between the states shown in Fig. 14 and 15. A user operation (operating) of the up and down keys 143 on the tracing screen 34 corresponds to "a second selection operation to select a certain graph among multiple graphs." While the tracing screen 34 is being shown, the second selection operation is accepted at any time.

When the tangent line item 234 is selected on the menu screen 23 in Fig. 6, the tangent line drawing mode is started. In the tangent line drawing mode, the graph selection screen 32 is not shown, and the tangent line drawing screen 35 in Fig. 16 is shown on the display unit 15 straight away. The operation of the tangent line drawing mode, the displayed content of the tangent line drawing screen 35 are similar to the operation of the tracing mode and the displayed content of the tracing screen 34 except that the tangent line at the position of the cursor C on the selected graph GA is shown as the second information I2. Therefore, on the tangent line drawing screen 35, the first graph G1 and the second graph G2 are displayed in black, and the selected graph GA (the graph to which the tangent is drawn) is switched by each user operation of the up and down keys 143.

As described above, while the graph selection screen 32 is not shown in the tracing mode and the tangent line drawing mode, the graph selection screen 32 is shown before the analysis result screen 33 in the graph solving mode. The main reason for this is that the maximum time required for processing of calculation of the first information I1 by the CPU 11 in the graph solving mode is longer than the maximum time required for processing of calculation of the second information I2 by the CPU 11 in the tracing mode and the tangent line drawing mode. In the graph solving mode, the calculation processing of the first information I1 takes tens of seconds to several minutes when the function is complicated depending on the analysis objects. Thus, if the selected graph GA can be switched on the analysis result screen 33 showing the first information I1, there will be a long waiting time each time the selected graph GA is switched. This is why the graph selection screen 32 is provided before the analysis result screen 33 to confirm the setting of the selected graph GA before the calculation processing of the first information I1 in the graph solving mode. On the other hand, the second information I2 in the tracing mode (coordinate values of the trace position), and the second information I2 in the tangent line drawing mode (tangent line) only require simple calculation processing and a short processing time regardless of the functions. Thus, the graph selection screen 32 is omitted, since the second information I2 concerning the switched selected graph GA can be shown in a short period of time even when the selected graph GA can be switched on the tracing screen 34 and the tangent line drawing screen 35.

Among the information that can be calculated by the CPU 11, the information that requires comparatively a long time for calculation is set as the first information I1 and the information that requires comparatively a short time for calculation as the second information I2.

### (Graph Drawing Processing)

Next, graph drawing processing executed by the CPU 11 to realize the above-described operations is described.

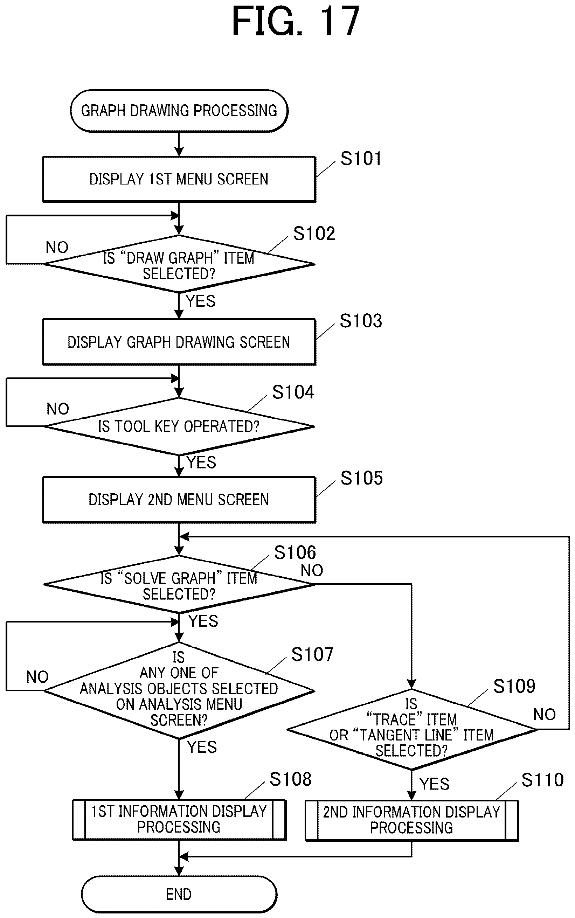

Fig. 17 is a flowchart showing a control procedure of the graph drawing processing. The graph drawing processing is started when the icon of the graph app is selected on the home screen. When the graph drawing processing is started, the CPU 11 shows the first menu screen 21 on the display unit 15 (Step S101). The CPU 11 repeatedly determines whether the draw-graph item 213 is selected or not (Step S102), and upon determining that the draw-graph item 213 is selected ("YES" at Step S102), the CPU 11 shows the graph drawing screen 31 on the display unit 15 (Step S103). The CPU 11 repeatedly determines whether the tool key 145 is pressed by a user operation (Step S104), and upon determining that the tool key 145 is pressed ("YES" at Step S104), the CPU 11 shows the second menu screen 23 on the display unit 15 (Step S105).

The CPU 11 determines whether the solve-graph item 232 is selected (Step S106). Upon determining that the "solve-graph" item 232 is selected ("YES" at Step S106), the CPU 11 shows the analysis menu screen 24 on the display unit 15, and repeatedly determines whether any one of the analysis objects is selected on the analysis menu screen 24 (Step S107). Upon determining that one of the analysis objects is selected ("YES" at Step S107), the CPU 11 executes first information display processing for displaying the first information I1 concerning the selected analysis object (Step S108).

Upon determining that the "solve-graph" item 232 is not selected at Step S106 ("NO" at Step S106), the CPU 11 determines whether the trace item 233 or the tangent line item 234 is selected or not (Step S109). Upon determining that neither the trace item nor the tangent line item 234 is selected ("NO" at Step S109), the CPU 11 returns the procedure to Step S106. Upon determining the trace item 233 or the tangent line item 234 is selected ("YES" at Step S109), the CPU 11 executes second information display processing for displaying the coordinate values of the trace position as the second information i2 in the trace mode or the tangent line as the second information I2 in the tangent line drawing mode (Step S110).

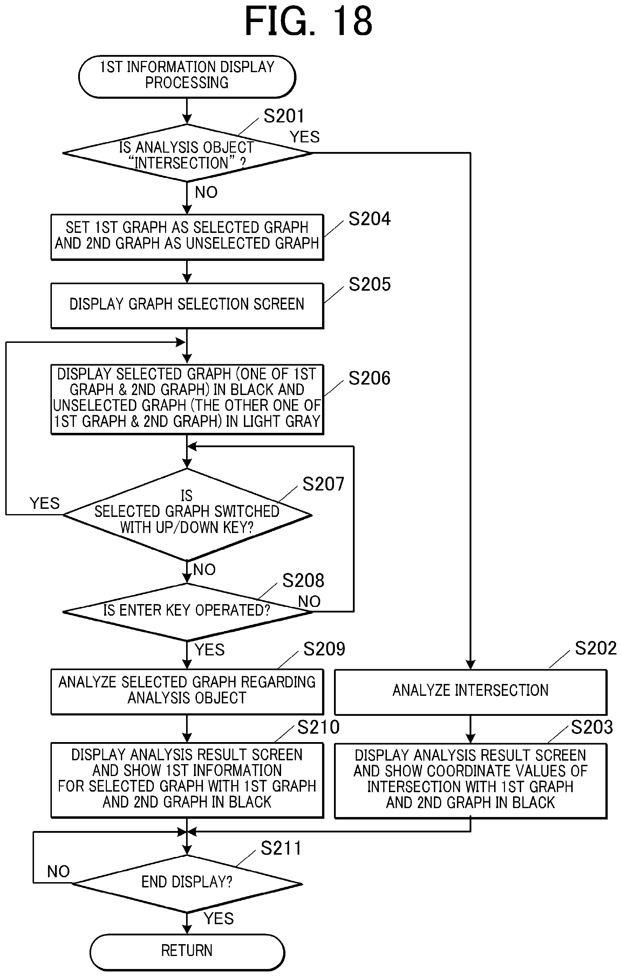

Fig. 18 is a flowchart showing a control procedure of the first information display processing. When the first information display processing is called, the CPU 11 determines whether the selected analysis object is the "intersection" of the first graph G1 and the second graph G2 (Step S201). Upon determining that the analysis object is the "intersection" ("YES" at Step S201), the CPU 11 executes analysis of the intersection (Step S202). The CPU 11 shows the analysis result screen 33 on the display unit 15, and displays the coordinate values with the first graph G1 and the second graph G2 in black on the display unit 15 (Step S203).

Upon determining that an analysis object other than the "intersection" ("NO" at Step S201), the CPU 11 sets the first graph G1 as the selected graph GA and the second graph G2 as the unselected graph GB temporarily (Step S204). The CPU 11 shows the graph selection screen 32 on the display unit 15 (Step S205), and displays either the fist graph G1 and the second graph G2 as the selected graph GA in black and the other one as the unselected graph GB in light gray (Step S206). Specifically, the CPU 11 generates the display image data 121 including the selected graph GA in black, the unselected graph GB and the x and y axes in light gray, and presenting the intersection of the selected graph GA and the unselected graph GB in black. The CPU 11 then transmits the generated display image data 121 to the display unit 15 to display the selected graph GA in black and the unselected graph GB in light gray on the graph selection screen 32.

The CPU 11 determines whether the selected graph GA is switched with the up and down keys 143 (Step S207). Upon determining that the selected graph GA is switched ("YES" at Step S207), the CPU 11 returns the procedure to Step S206 and shows the selected graph GA and the unselected graph GB again. Upon determining that the selected graph GA is not switched ("NO" at Step S207), the CPU 11 determines whether the enter key 142 is operated (Step S208). Upon determining that the enter key 142 is not operated ("NO" at Step S208), the CPU 11 returns the procedure to Step S207.

Upon determining that the enter key 142 is operated ("YES" at Step S208), the CPU 11 confirms the setting of the selected graph GA and the unselected graph GB and executes the analysis concerning the analysis object for the selected graph GA (Step S209). The CPU 11 shows the analysis result screen 33 on the display unit 15 to display the first information I1 concerning the selected graph GA with the first graph G1 and the second graph G2 (Step S210). After ending Step S203 or S210, the CPU 11 repeatedly determines whether a user operation for ending the display of the analysis result is input (Step S211). Upon determining that the user operation is input, the CPU 11 ends the first information display processing and returns to the graph drawing processing in Fig. 17.

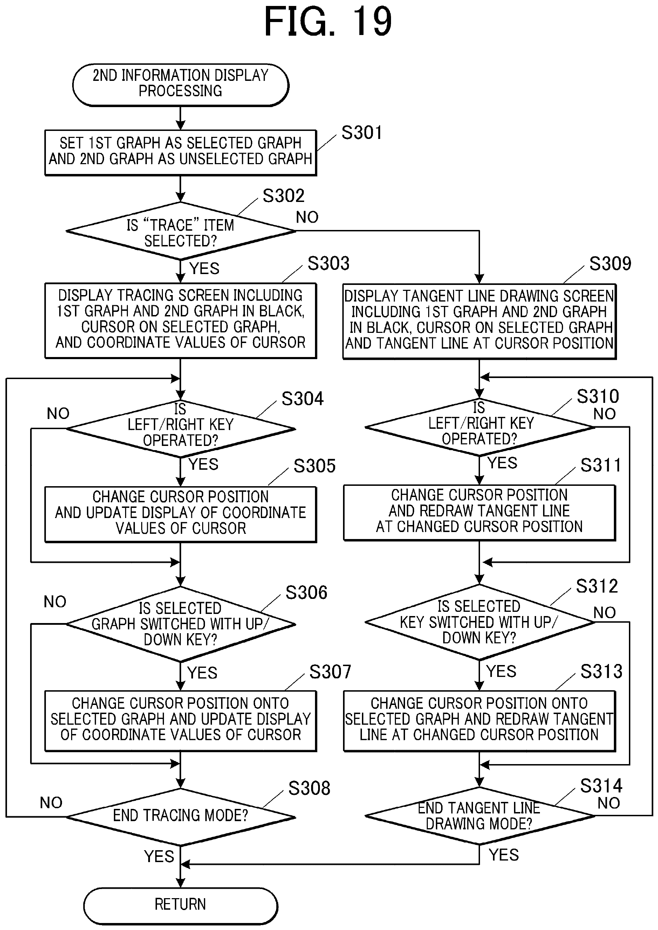

Fig. 19 is a flowchart showing a control procedure of second information display processing. When the second information display processing is called, the CPU 11 sets the first graph G1 as the selected graph GA and the second graph G2 as the unselected graph GB temporarily (step S301). The CPU 11 determines whether the trace item 233 is selected or not (Step S302). Upon determining that the trace item 233 is selected ("YES" at Step S302), the CPU 11 transitions to the tracing mode. The CPU 11 shows the tracing screen 34 including the first graph G1 and the second graph G2 in black, the cursor C on the selected graph GA and its coordinates on display unit 15 (Step S303) .

Upon determining that either one of the left and right keys 144 is operated ("YES" at Step S304), the CPU 11 changes the position of the cursor C and updates the display of the coordinates of the cursor C (Step S305). After ending Step S305 or upon determining that the left and right keys 144 are not operated at Step S304 ("NO" at Step S304), the CPU 11 determines whether the selected graph GA is switched with the up and down keys 143 (Step S306). Upon determining the selected graph GA is switched ("YES" at Step S306), the CPU 11 changes the position of the cursor C onto the switched selected graph GA and updates the display of the coordinate values of the cursor C (Step S307). After ending Step S307, or upon determining that the selected graph GA is switched at Step S306 ("NO" at Step S306), the CPU 11 determines whether a user operation for ending the tracing mode is input (Step S308). Upon accepting that the concerning user operation is not input ("NO" at Step S308), the CPU 11 returns the procedure to Step S304, and upon determining that the concerning user operation is input ("YES" at Step S308), the CPU 11 ends the second information display processing and returns the procedure to the graph drawing processing in Fig. 17.

On the other hand, upon determining that the trace item 233 is not selected (that is, the tangent line item 234 is selected) at Step S302 ("NO" at Step S302), the CPU 11 transitions to the tangent line drawing mode. The CPU 11 shows the tangent line drawing screen 35 including the first graph G1 and the second graph G2 in black, the cursor C on the selected graph GA and its tangent line at the position of the cursor C on the display unit 15 (Step S309) .

Upon determining that one of the left and right keys 144 is operated ("YES" at Step S310), the CPU 11 changes the position of the cursor C and redraws the tangent line at the changed position of the cursor C (Step S311). After ending Step S311 or upon determining that the left and right key 144 are not operated at Step S310 ("NO" at Step S310), the CPU 11 determines whether the selected graph GA is switched with the up and down keys 143 (Step S312). Upon determining that the selected graph GA is switched ("YES" at Step S312), the CPU 11 changes the position of the cursor C to the switched selected graph GA and redraws the tangent line at the changed position of the cursor C (Step S313). After ending Step S313 or upon determining that the selected graph GA is not selected at Step 312 ("NO" at Step S312), the CPU 11 determines whether a user operation for ending the tangent line drawing mode is input (Step S314). Upon determining that the concerning user operation is not input ("NO" at Step S314), the CPU 11 returns the procedure to Step S310, and upon determining that the concerning user operation is input ("YES" at Step S314), the CPU 11 ends the second information display processing and returns the procedure to the graph drawing processing in Fig. 17.

After ending the first information display processing (Step S109) or second information display processing (Step S110) in Fig. 17, the CPU 11 ends the display of the graph(s). Figs. 17 to 19 are each an example of the processing flow of the graph drawing processing, and the flow may be branched to other steps according to the user operation. For example, when a user operation for ending the graph app is input (e.x., a user operation to press the home key 141) at each step in Figs. 17 to 19, the graph drawing processing may be ended.

### (Effects)

As described hereinbefore, the scientific calculator 1 according to the present embodiment includes the display unit 15 (display) and the CPU 11 (at least one processor). The CPU 11 shows on the display 15 the graph selection screen 32 for accepting the first selection operation to set, of the first graph G1 and the second graph G2 shown on the display with the x and y axes, a graph the first information I1of which is to be shown as the selected graph GA, and to set, as the unselected graph GB, the remaining graph the first information I1 of which is not to be shown. The CPU 11 shows on the display 15 the analysis result screen 33 on which the first information I1 relating to the selected graph GA is shown with the coordinate axes, the first graph G1, and the second graph G2 when the selected graph GA is confirmed on the graph selection screen 32. The CPU 11 displays the unselected graph GB of the first graph G1 and the second graph G2 with a lower color density than a color density of the selected graph on the selection screen. For example, on the graph selection screen 32 shown in Figs. 8 and 9, the information for specifying the selected graph GA besides the color density of the graph is the display of the formula of the first function f(x) or the second function g(x) at the upper left of the main display area 151 only. Therefore, when the user does not know the shapes of the first graph G1 and the second graph G2 respectively representing the first function f(x) and the second function g(x) or when the shapes of the first graph G1 and the second graph G2 look similar, it is not easy to specify the selected graph GA from the formulas and the graph shapes of the first function f(x) and the second function g(x). On the other hand, when the unselected graph GB is displayed with a low color density than the selected graph GA as in the present embodiment, the selected graph GA can be displayed in a visually recognizable manner on the graph selection screen 32. The selected graph GA and the unselected graph GB are easily recognized on the display unit 15 with a low resolution of the scientific calculator 1.

The CPU 11 displays the first graph G1 and the second graph G2 with the same color density on the analysis result screen 33. This makes it possible to easily recognize the coordinates concerning the analysis result and the positional relation between the first graph G1 and the second graph G2 on the analysis result screen 33.

The first information is any one of: i) a "root" or a "y-intercept" (coordinate values of an intercept of the selected graph and one of the coordinate axes orthogonal to each other); ii) a "maximum value" or "minimum value" (a maximum value or a minimum value in a predetermined range of the selected graph); and iii) an "x-coordinate value" or a "y-coordinate value" (a coordinate value with respect to one of the two coordinate axes corresponding to a predetermined coordinate value with respect to the other one of the two coordinate axes). This makes it possible to display the selected graph GA to be analyzed regarding these analysis objects in an easily recognizable way on the analysis result screen 33.

The CPU 11 accepts, when showing on the display unit 15 the tracing screen 34 or the tangent line drawing screen 35 on which shown is the second information that relates to the selected graph (a certain graph) of the first graph G1 and the second graph G2, the second selection operation for selecting a graph the second information of which is to be shown of the first graph G1 and the second graph G2 while showing the tracing screen 34 or the tangent line drawing screen 35. The CPU 11 displays the first graph G1 and the second graph G2 with a same color density while showing the tracing screen 34 or the tangent line drawing screen 35. This makes it possible to display, in response to the switching of the selected graph GA, the second information I2 concerning the switched selected graph GA in the tracing mode and the tangent line drawing mode right away. It is also possible to easily grasp the coordinates concerning the second information I2 and the positional relationship between the first graph G1 and the second graph G2 by the display of the first graph G1 and the second graph G2 with the same color density (black).

The maximum amount of time required for processing for calculation of the first information I1 by the CPU 11 is longer than the maximum amount of time required for processing for calculation of the second information I2 by the CPU 11. When the first information I1 whose calculation processing takes a long time is shown, a long waiting time is not required in switching the selected graph GA by displaying graph selection screen 32 to set the selected graph GA in advance before the analysis result screen 33 is shown.

The second information I2 is coordinate values corresponding to the trace position when the selected graph GA is traced or a tangent line at a certain position on the selected graph GA. This makes it possible to display the coordinate values of the trace position or the tangent line while switching the selected graph GA.

The CPU 11 is configured to be capable of displaying the first graph G1 and the second graph G2 in line styles different from each other. This makes it easy to visually distinguish the first graph G1 and the second graph G2.

The CPU 11 applies a display style of the selected graph GA to the position of the intersection of the selected graph GA and the unselected graph GB on the graph selection screen 32. This provides a visual effect such that the selected graph GA looks superimposed on the unselected graph GB. This makes it possible to display the selected graph GA in an intuitively recognizable manner.

The CPU 11 displays, on the graph selection screen 32, the selected graph GA with a color density same as the color density with which the first graph G1 and the second graph G2 are displayed on the first information display screen. This makes it possible to display the selected graph GA on the graph selection screen 32 in a visually recognizable manner.

The scientific calculator 1 according to the present embodiment includes the CPU 11 that shows on the display unit 15 the first graph G1 and the second graph G2 with the x and y axes when a first mode (graph solving mode) or a second mode (tracing mode or tangent line display mode) is selected by a user. The second information I2 is shown with the first graph G1 and the second graph G2 on the tracing screen 34 or the tangent line drawing screen 35 and, the second mode is set as a mode in which the user can select, as the selected graph GA (second selected graph), a graph the second information I2 of which is to be shown of the first graph G1 and the second graph G2 on the tracing screen 34 or the tangent line drawing screen 35. The first mode is set as a mode in which the graph selection screen 32 is shown before transition to the analysis result display screen 33 on which the first information I1 different from the second information I2 is shown with the first graph G1 and the second graph G2 is started. The graph selection screen 32 is for the user selecting, as the selected graph GA (first selected graph), a graph the first information of which is to be shown of the first graph G1 and the second graph G2. The CPU 11 displays, while displaying the first graph G1 and the second graph G2 with a same color density on the analysis result screen 33, the tracing screen 34, or the tangent line drawing screen 35, a graph(s) (unselected graph GB) other than the selected graph GA of the first graph G1 and the second graph G2 with a lower color density than a color density of the selected graph on the graph selection screen 32. In the information control method according to the present embodiment, the CPU 11 executes the above-described operations. The program 131 according to the present embodiment causes the CPU 11 to function as the control means which executes the above-described operations. When the graph(s) other than the selected graph GA (unselected graph GB) is displayed with a lower color density than the color density of the selected graph GA, the selected graph GA can be displayed in a visually recognizable manner on the graph selection screen 32. It is possible to easily grasp the coordinates regarding the first information I1 the second information I2 and the positional relationship between the first graph G1 and the second graph G2, as the first graph G1 and the second graph G2 are displayed with the same color density on the analysis result screen 33 and the tracing screen 34 or the tangent line drawing screen 35.

The display control method executed by the CPU 11 includes: showing on the display unit 15 the graph selection screen 32 for accepting the first selection operation; showing the analysis result screen 33 on the display unit 15 when the selected graph GA is confirmed on the graph selection screen 32; and displaying the unselected graph GB of the first graph G1 and the second graph G2 with a lower color density than a color density of the selected graph GA on the selection screen. This makes it possible to display the selected graph GA in a visually recognizable manner on the graph selection screen 32.

The program according to the present embodiment causes the CPU 11 to function as the control means that can show the first graph G1 and the second graph G2 with predetermined coordinate axes on the display unit 15. The control means shows the graph selection screen 32 for accepting the first selection operation on the display unit 15, shows the analysis result screen 33 on the display unit 15 when the selected graph GA is confirmed on the graph GA on the graph selection screen 32, and displays the unselected graph GB with a lower color density than the color density of the selected graph GA of the first graph G1 and the second graph G2 on the graph selection screen 32. This makes it possible to display the selected graph GA in a visually recognizable manner on the graph selection screen 32.

Namely, according to the present embodiment, the interaction process between the user and the device can support the user in performing technical tasks (obtaining information on a graph without mistaking graph selection) in a reliable way.

### (Misc.)

The present disclosure is not limited to the embodiments described hereinbefore, and various changes can be made thereto. For example, the scientific calculator 1 is an example of the electronic device in the above embodiments, but the present disclosure is not limited thereto. The electronic device may be any device as long as it can display multiple graphs on its display unit, and may be a smartphone, a tablet, a learning terminal, or the like.

In the above embodiments, the two graphs corresponding to the two functions are shown on the display unit 15, but three or more graphs representing three or more functions may be displayed on the display unit 15. In that case, one selected graph GA is displayed and the other two or more unselected graphs GB are displayed in a color other than black such as light gray on the graph selection screen 32.

In the above description, a flash memory of the storage unit 13 is used as the computer-readable storage medium for the program according to the present disclosure as an example, but the present disclosure is not limited to this example. Other storage media such as a hard disk drive (HDD), a solid state drive (SSD), and a CD-ROM can be applied as the computer-readable medium. A carrier wave may be applied to this invention as the medium that provides the program data concerning the present invention via the communication lines.

The detailed configurations and operations of the components of the scientific calculator 1 can also be appropriately modified without departing from the scope of the present invention.

Although the embodiments of the present disclosure have been described above, the technical scope of the invention is not limited to the embodiments described above, but is defined based on the scope of the claims and its equivalents.

## Claims

1. An electronic device comprising:
a display means (15); and
a control means (11) that shows on the display means (15) a plurality of graphs with predetermined coordinate axes when a first mode or a second mode is selected by a user,
wherein predetermined second information is shown with the plurality of graphs on the display means (15) on a second information display screen (34, 35) and, the second mode is set as a mode in which the user can select, as a second selected graph, a graph the second information of which is to be shown among the plurality of graphs on the second information display screen (34, 35),
wherein the first mode is set as a mode in which a selection screen (32) is shown on the display means (15) before transition to a first information display screen (33) on which first information different from the second information is shown with the plurality of graphs on the display means (15), wherein the selection screen (32) is for the user selecting, as a first selected graph, a graph the first information of which is to be shown among the plurality of graphs,
wherein while displaying the plurality of graphs with a same color density on the first information display screen and on the second information display screen, the control means displays one or more unselected graphs other than the first selected graph among the plurality of graphs with a lower color density than a color density of the first selected graph on the selection screen.

2. The electronic device according to claim 1,
wherein among a plurality of pieces of information that can be calculated by the control means, information that requires a comparatively long time for calculation is set as the first information and information that requires a comparatively short time for calculation is set as the second information.

3. The electronic device according to claim 2,
wherein the first information is any one of: i) a coordinate value of an intercept of the selected graph and one of the coordinate axes orthogonal to each other; ii) a maximum value or a minimum value in a predetermined range of the selected graph; and iii) a coordinate value with respect to one of the two coordinate axes corresponding to a predetermined coordinate value with respect to the other one of the two coordinate axes.

4. The electronic device according to claim 2 or 3,
wherein the second information is information on a coordinate value of a trace position on the graph when the graph is traced or information on a tangent line at a predetermined position on the graph.

5. The electronic device according to any one of claims 1 to 4,
wherein the control means (11) is capable of displaying the plurality of graphs in line styles different from each other.

6. The electronic device according to any one of claims 1 to 5,
the control means (11) applies a display style of the first selected graph to an intersection of the first selected graph and the unselected graph on the selection screen (32).

7. The electronic device according to any one of claims 1 to 6,
Wherein the control means (11) displays, on the selection screen (32), the first selected graph with a color density same as the color density with which the plurality of graphs is displayed on the first information display screen.

8. A display control method, comprising:
a control step of showing on a display means (15) a plurality of graphs with predetermined coordinate axes when a first mode or a second mode is selected by a user,
wherein predetermined second information is shown with the plurality of graphs on the display means (15) on a second information display screen (34, 35) and, the second mode is set as a mode in which the user can select, as a second selected graph, a graph the second information of which is to be shown among the plurality of graphs on the second information display screen,
wherein the first mode is set as a mode in which a selection screen (32) is shown on the display means (15) before transition to a first information display screen (33) on which first information different from the second information is shown with the plurality of graphs on the display means (15), wherein the selection screen (32) is for the user selecting, as a first selected graph, a graph the first information of which is to be shown among the plurality of graphs,
wherein in the control step, while displaying the plurality of graphs with a same color density on the first information display screen and on the second information display screen, displayed are one or more unselected graphs other than the first selected graph among the plurality of graphs with a lower color density than a color density of the first selected graph on the selection screen.

9. The display control method according to claim 8,
wherein among a plurality of pieces of information that can be calculated in the control step, information that requires a comparatively long time for calculation is set as the first information and information that requires a comparatively short time for calculation is set as the second information.

10. The display control method according to claim 9,
wherein the first information is any one of: i) a coordinate value of an intercept of the selected graph and one of the coordinate axes orthogonal to each other; ii) a maximum value or a minimum value in a predetermined range of the selected graph; and iii) a coordinate value with respect to one of the two coordinate axes corresponding to a predetermined coordinate value with respect to the other one of the two coordinate axes.

11. The display control method according to claim 9 or 10,
wherein the second information is information on a coordinate value of a trace position on the graph when the graph is traced or information on a tangent line at a predetermined position on the graph.

12. The display control method according to any one of claims 8 to 11,
wherein in the control step, the plurality of graphs can be displayed with a same color density while showing the second information display screen.

13. The display control method according to any one of claims 8 to 12,
wherein in the control step, a display style of the first selected graph is applied to an intersection of the first selected graph and the unselected graphs on the selection screen (32).

14. The display control method according to any one of claims 8 to 13,
wherein in the control step, the first selected graph is displayed on the selection screen (32) with a color density same as the color density with which the plurality of graphs is displayed on the first information display screen.

15. A program causing a computer to function as:
a control means that shows on a display means (15) a plurality of graphs with predetermined coordinate axes when a first mode or a second mode is selected by a user,
wherein predetermined second information is shown with the plurality of graphs on the display means (15) on a second information display screen (34, 35) and, the second mode is set as a mode in which the user can select, as a second selected graph, a graph the second information of which is to be shown among the plurality of graphs on the second information display screen,
wherein the first mode is set as a mode in which a selection screen (32) is shown on the display means (15) before transition to a first information display screen (33) on which first information different from the second information is shown with the plurality of graphs on the display means (15), wherein the selection screen (32) is for the user selecting, as a first selected graph, a graph the first information of which is to be shown among the plurality of graphs,
wherein while displaying the plurality of graphs with a same color density on the first information display screen and on the second information display screen, the control means displays one or more unselected graphs other than the first selected graph among the plurality of graphs with a lower color density than a color density of the first selected graph on the selection screen.
